# EUROPEAN PATENT APPLICATION

(11) **EP 4 788 013 A1**
(43) Date of publication of application: **05.08.2026**
(21) Application number: 23953584.2
(22) Date of filing: 27.09.2023
(51) Int. Cl.: H04W 72/1268

(54) **INFORMATION TRANSMISSION METHOD, AND PDCP ENTITY, RLC ENTITY, TERMINAL AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Dehns Germany Partnerschaft mbB
(86) International application number: PCT/CN2023/122338
(87) International publication number: WO 2025/065432

(57) **Abstract**

Provided in the embodiments of the present disclosure are an information transmission method, and a PDCP entity, an RLC entity, a terminal and a storage medium. The information transmission method comprises: a packet data convergence protocol (PDCP) entity of a terminal sending indication information to a radio link control (RLC) entity, wherein the indication information is used for indicating a target data packet for which the remaining duration is lower than a first threshold value.

## Description

### TECHNICAL FIELD

The present disclosure relates to the field of communication technology, particularly to an information transmission method, PDCP entity, RLC entity, terminal, and storage medium.

### BACKGROUND

In a communication system, some services have requirements of low latency, high throughput and high reliability, such as an eXtended Reality (XR) service in a 5th-Generation (5G) wireless communication system. In the XR service, data is usually composed of a plurality of Quality of Service (QoS) flows with an extremely large traffic volume. Moreover, the service flows of the XR service need to meet certain latency requirements during transmission, especially some data flows need to reach a server simultaneously for decoding, and the delay of any one of the data flows will lead to the failure of joint decoding of a plurality data flows.

### SUMMARY

In a communication system, there exists a problem of low accuracy in uplink resource scheduling.

Embodiments of the present disclosure provide an information transmission method, PDCP entity, RLC entity, terminal, and storage medium

A first aspect of the embodiments of the present disclosure provides an information transmission method, applied to a Packet Data Convergence Protocol (PDCP) entity, the method including:
sending indication information to a Radio Link Control (RLC) entity, wherein the indication information is configured to indicate a target data packet with a remaining time less than a first threshold.

A second aspect of the embodiments of the present disclosure provides an information transmission method, applied to an RLC entity, the method including:
receiving indication information sent by a PDCP entity, wherein the indication information is configured to indicate a target data packet with a remaining time less than a first threshold.

A third aspect of the embodiments of the present disclosure provides a PDCP entity, including:
a first transceiver module configured to send indication information to an RLC entity, wherein the indication information is configured to indicate a target data packet with a remaining time less than a first threshold.

A fourth aspect of the embodiments of the present disclosure provides an RLC entity, including:
a second transceiver module configured to receive indication information sent by a PDCP entity, wherein the indication information is configured to indicate a target data packet with a remaining time less than a first threshold.

A fifth aspect of the embodiments of the present disclosure provides a terminal including a PDCP entity and an RLC entity,
the PDCP entity is configured to send indication information to the RLC entity, and the indication information is configured to indicate a target data packet with a remaining time less than a first threshold; and
the RLC entity is configured to receive the indication information sent by the PDCP entity, and the indication information is configured to indicate the target data packet with the remaining time less than the first threshold.

A sixth aspect of the embodiments of the present disclosure provides a communication device, including:
one or more processors,
wherein the processor is configured to invoke instructions to cause the communication device to execute the information transmission method according to the first or the second aspect.

A seventh aspect of the embodiments of the present disclosure provides a storage medium having instructions stored thereon that, when run on a communication device, cause the communication device to execute the information transmission method according to the first or the second aspect.

The technical solution provided by the embodiments of the present disclosure can improve accuracy in uplink resource scheduling.

It should be understood that the foregoing general description and the following detailed description are merely illustrative and explanatory, and do not limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the embodiments of the present disclosure.
Fig. 1 is a schematic structural diagram of a communication system according to an example embodiment;
Fig. 2 is a schematic flow chart of an information transmission method according to an example embodiment;
Fig. 3a is a schematic flow chart of an information transmission method according to an example embodiment;
Fig. 3b is a schematic flow chart of an information transmission method according to an example embodiment;
Fig. 4a is a schematic flow chart of an information transmission method according to an example embodiment;
Fig. 4b is a schematic flow chart of an information transmission method according to an example embodiment;
Fig. 5 is a schematic interaction diagram of an information transmission method according to an example embodiment;
Fig. 6a is a schematic structural diagram of a PDCP entity according to an example embodiment;
Fig. 6b is a schematic structural diagram of an RLC entity according to an example embodiment;
Fig. 7a is a schematic structural diagram of a communication device according to an example embodiment; and
Fig. 7b is a schematic structural diagram of a chip according to an example embodiment.

### DETAILED DESCRIPTION

Embodiments of the present disclosure provide an information transmission method, a PDCP entity, an RLC entity, a terminal and a storage medium.

In a first aspect, embodiments of the present disclosure provide an information transmission method, applied to a PDCP entity, the method including:

sending indication information to an RLC entity, wherein the indication information is configured to indicate a target data packet with a remaining time less than a first threshold.

In the above embodiments, the PDCP entity of a terminal sends the indication information to the RLC entity, so that the RLC entity can know which data packets have the remaining time less than the first threshold according to the indication information, and further the RLC entity can use the indication information to count to-be-transmitted RLC data packets whose the remaining time is close to the threshold. This can make up for the defect that the RLC entity cannot count the to-be-transmitted RLC data packets when the terminal conducts DSR reporting, and can better meet the emergency scheduling requirements of service data.

In combination with some embodiments of the first aspect, in some embodiments, the method further includes:

detecting, by the PDCP entity, the target data packet the remaining time less than a first threshold, and determining to trigger a Delay Status Report (DSR).

In the above embodiments, the PDCP entity of the terminal sends the indication information to the RLC entity, so that the RLC entity can use the indication information sent by the PDCP entity to count the to-be-transmitted RLC data packets whose remaining time is close to the threshold, which is conducive to improving the accuracy of the data volume reported by the DSR.

In combination with some embodiments of the first aspect, in some embodiments, the remaining time of the target data packet is a remaining discard timer value associated with the target data packet.

In the above embodiments, using the remaining discard timer value associated with the target data packet as the remaining time of the target data packet can ensure the accuracy of the remaining time of the target data packet.

In combination with some embodiments of the first aspect, in some embodiments, the target data packet with the remaining time less than the first threshold includes:
a first PDCP Service Data Unit (SDU) with a remaining time less than the first threshold, wherein a first PDCP data Protocol Data Unit (PDU) associated with the first PDCP SDU is being or has been sent to the RLC entity.

In the above embodiments, since the target data packet includes the first PDCP SDU whose remaining time is less than the first threshold and the first PDCP data PDU associated with the first PDCP SDU is being or has been sent to the RLC entity, the RLC entity can directly use the first PDCP SDU as the RLC SDU to count the RLC SDU or the to-be-transmitted RLC data SDU associated therewith, which can improve the accuracy of the counting result of the to-be-transmitted RLC data.

In combination with some embodiments of the first aspect, in some embodiments, the target data packet is configured for the RLC entity to determine a first data packet for which a data volume is to be counted, and the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In the above embodiments, the target data packet indicated by the indication information is used for the RLC entity to determine the first data packet for which the data volume is to be counted, and the first data packet includes to-be-transmitted RLC data packets in different scenarios, so that the RLC entity can flexibly count the to-be-transmitted RLC data in different scenarios.

In combination with some embodiments of the first aspect, in some embodiments, the data volume of the first data packet is configured to generate a data volume of DSR.

In the above embodiments, the data volume of the first data packet is used to generate the data volume of the DSR, which can improve the accuracy of the data volume reported by the DSR, thereby better meeting the emergency scheduling requirements of service data.

In combination with some embodiments of the first aspect, in some embodiments, the indication information includes at least one of:
an identifier of the target data packet; or
the remaining time of the target data packet.

In the above embodiments, since the indication information includes the identifier of the target data packet and/or the remaining time of the target data packet, the RLC entity can clearly know which to-be-transmitted RLC data packets need to have their data volumes counted, thereby improving the accuracy of the counting result of the to-be-transmitted RLC data packets.

In combination with some embodiments of the first aspect, in some embodiments, in a data packet set to which the target data packet belongs, expiration times of discard timers associated with different data packets are same.

In the above embodiments, considering that when a plurality of data packets in the same data packet set arrive at the PDCP layer at different times but the discard timers associated with the plurality of data packets in the same data packet set have the same expiration time, the data packets in the same data packet set that have not been scheduled for a long time can be emergently scheduled through DSR reporting. Further, different data packets in the same data packet set can reach the server simultaneously for decoding, which can effectively reduce the possibility that the to-be-transmitted data is discarded and reduce the failure of joint decoding of a plurality of data flows caused by the delay of the data flows.

In a second aspect, the embodiments of the present disclosure provide an information transmission method, applied to an RLC entity, the method including:
receiving indication information sent by a PDCP entity, wherein the indication information is configured to indicate a target data packet with a remaining time less than a first threshold.

In the above embodiments, the RLC entity of the terminal receives the indication information sent by the PDCP entity, so that the RLC entity can know which data packets have a remaining time less than the first threshold according to the indication information, and further the RLC entity can use the indication information to count the to-be-transmitted RLC data packets whose remaining time is close to the threshold. This can make up for the defect that the RLC entity cannot count the to-be-transmitted RLC data packets when the terminal conducts DSR reporting.

In combination with some embodiments of the second aspect, in some embodiments, the remaining time of the target data packet is a remaining discard timer value associated with the target data packet.

In combination with some embodiments of the second aspect, in some embodiments, the target data packet with the remaining time less than the first threshold includes:
a first PDCP SDU with a remaining time less than the first threshold, wherein a first PDCP data PDU is being or has been sent to the RLC entity; and
the first PDCP data PDU that is being or has been sent to the RLC entity.

In combination with some embodiments of the second aspect, in some embodiments, the method further includes:
determining, according to the target data packet indicated by the indication information, a first data packet for which a data volume is to be counted, wherein the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In combination with some embodiments of the second aspect, in some embodiments, the data volume of the first data packet is configured to generate a data volume of DSR.

In combination with some embodiments of the second aspect, in some embodiments, the indication information includes at least one of:
an identifier of the target data packet; or
the remaining time of the target data packet.

In combination with some embodiments of the second aspect, in some embodiments, in a data packet set to which the target data packet belongs, expiration times of discard timers corresponding to different data packets are same.

In a third aspect, the embodiments of the present disclosure provide a PDCP entity, including:
a first transceiver module configured to send indication information to an RLC entity, wherein the indication information is configured to indicate a target data packet with a remaining time less than a first threshold.

In combination with some embodiments of the third aspect, in some embodiments, the PDCP entity further includes:
a first determining module configured to detect the target data packet with the remaining time less than the first threshold, and determine to trigger DSR.

In combination with some embodiments of the third aspect, in some embodiments, the remaining time of the target data packet is a remaining discard timer value associated with the target data packet.

In combination with some embodiments of the third aspect, in some embodiments, the target data packet with the remaining time less than the first threshold comprises:
a first PDCP Service Data Unit (SDU) with a remaining time less than the first threshold, wherein a first PDCP data Protocol Data Unit (PDU) associated with the first PDCP SDU is being or has been sent to the RLC entity.

In combination with some embodiments of the third aspect, in some embodiments, the target data packet is configured for the RLC entity to determine a first data packet for which a data volume is to be counted, and the first data packet includes at least one of:
an RLC SDU or an RLC SDU segment of the RLC SDU that has not been comprised in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In combination with some embodiments of the third aspect, in some embodiments, the data volume of the first data packet is configured to generate a data volume of DSR.

In combination with some embodiments of the third aspect, in some embodiments, the indication information includes at least one of:
an identifier of the target data packet; or
the remaining time of the target data packet.

In combination with some embodiments of the third aspect, in some embodiments, in a data packet set to which the target data packet belongs, expiration times of discard timers associated with different data packets are same.

In a fourth aspect, the embodiments of the present disclosure provide an RLC entity, including:
a second transceiver module configured to receive indication information sent by a PDCP entity, wherein the indication information is configured to indicate a target data packet with a remaining time less than a first threshold.

In combination with some embodiments of the fourth aspect, in some embodiments, the remaining time of the target data packet is a remaining discard timer value associated with the target data packet.

In combination with some embodiments of the fourth aspect, in some embodiments, the target data packet with the remaining time less than the first threshold includes:
a first PDCP SDU with a remaining time less than the first threshold, wherein a first PDCP data PDU is being or has been sent to the RLC entity; and
the first PDCP data PDU that is being or has been sent to the RLC entity.

In combination with some embodiments of the fourth aspect, in some embodiments, the RLC entity further includes:
a second determining module configured to determine, according to the target data packet indicated by the indication information, a first data packet for which a data volume is to be counted, wherein the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In combination with some embodiments of the fourth aspect, in some embodiments, the data volume of the first data packet is configured to generate a data volume of DSR.

In combination with some embodiments of the fourth aspect, in some embodiments, the indication information includes at least one of:
an identifier of the target data packet; or
the remaining time of the target data packet.

In combination with some embodiments of the fourth aspect, in some embodiments, in a data packet set to which the target data packet belongs, expiration times of discard timers corresponding to different data packets are same.

In a fifth aspect, the embodiments of the present disclosure provide a terminal including a PDCP entity and an RLC entity,
the PDCP entity is configured to send indication information to the RLC entity; wherein the indication information is configured to indicate a target data packet with a remaining time less than a first threshold; and
the RLC entity is configured to receive the indication information sent by the PDCP entity, wherein the indication information is configured to indicate the target data packet with the remaining time less than a first threshold.

In combination with some embodiments of the fifth aspect, in some embodiments, the PDCP entity is configured to:
detect the target data packet with the remaining time less than the first threshold, and determine to trigger DSR.

In combination with some embodiments of the fifth aspect, in some embodiments, the remaining time of the target data packet is a remaining discard timer value associated with the target data packet.

In combination with some embodiments of the fifth aspect, in some embodiments, the target data packet with the remaining time less than the first threshold includes:
a first PDCP SDU with a remaining time less than the first threshold, wherein a first PDCP data PDU associated with the first PDCP SDU is being or has been sent to the RLC entity.

In combination with some embodiments of the fifth aspect, in some embodiments, the RLC entity is further configured to:
a second determining module configured to determine, according to the target data packet indicated by the indication information, a first data packet for which a data volume is to be counted, wherein the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In combination with some embodiments of the fourth aspect, in some embodiments, the indication information includes at least one of:
an identifier of the target data packet; or
the remaining time of the target data packet.

In combination with some embodiments of the fourth aspect, in some embodiments, in a data packet set to which the target data packet belongs, expiration times of discard timers corresponding to different data packets are same.

In a sixth aspect, the embodiments of the present disclosure provide a communication device, including:
one or more processors;
wherein the processor is configured to invoke instructions to cause the communication device to execute the information transmission method described in the optional implementation manners of the first aspect or the second aspect.

In a seventh aspect, the embodiments of the present disclosure provide a storage medium having instructions stored thereon that, when run on a communication device, cause the communication device to execute the information transmission method described in the optional implementation manners of the first aspect or the second aspect.

In an eighth aspect, the embodiments of the present disclosure provide a program product which, when executed by a communication device, causes the communication device to execute the information transmission method described in the optional implementation manners of the first aspect or the second aspect.

In a ninth aspect, the embodiments of the present disclosure provide a computer program which, when runs on a computer, causes the computer to execute the information transmission method described in the optional implementation manners of the first aspect or the second aspect.

It can be understood that the above terminal, network element, communication device, communication system, storage medium, program product and computer program are all used to execute the information transmission method provided by the embodiments of the present disclosure. Therefore, the beneficial effects that can be achieved can refer to the beneficial effects in the corresponding method, and details are not repeated here.

The embodiments of the present disclosure propose an information transmission method, a terminal, a network device and a communication device. In some embodiments, terms such as an information transmission method, an information processing method and a communication method may be interchanged, and terms such as an information transmission system, a communication system and an information processing system may be interchanged.

The embodiments described herein are not exhaustive but merely illustrate some embodiments, which do not constitute specific limitations on the protection scope of the present disclosure. If there is no contradiction, each step within an embodiment may be implemented as an independent embodiment, and various steps therein may be arbitrarily combined. For example, a solution in an embodiment with some steps removed may be implemented as an independent embodiment, and steps in an embodiment may be arbitrarily exchanged in sequence. Furthermore, optional implementations in an embodiment may be arbitrarily combined. Moreover, various embodiments may be arbitrarily combined. For example, some or all steps from different embodiments may be arbitrarily combined, and an embodiment may be arbitrarily combined with an optional implementation from another embodiment.

In the embodiments of the present disclosure, unless otherwise specified or logically conflicting, the terms and/or descriptions remain consistent across the embodiments and may be cross-referenced. Technical features from different embodiments may be combined to form a new embodiment based on inherent logical relationships thereof.

The term employed in the embodiments of the present disclosure serves solely to describe specific embodiments and shall not be construed as limiting the scope of the present disclosure.

In the embodiments of the present disclosure, unless otherwise specified, the singular form for describing an element, such as "a", "an", "the", "the aforementioned", "said", "the foregoing", "this", etc., may denote "one and only one", "one or more", "at least one", etc. For example, where articles such as "a", "an", or "the" are employed in translation, the noun following such article may be understood as either singular or plural.

In the embodiments of the present disclosure, "a plurality of" denotes two or more.

In some embodiments, terms such as "at least one of", "one or more", "a plurality of", and "multiple" may be used interchangeably.

In some embodiments, depending on the content, the expressions such as "at least one of A or B", "A and/or B", "A in one case, B in another case", or "in response to case A, in response to another case B" may include the following technical solutions: in some embodiments, A (A is executed independently of B); in some embodiments, B (B is executed independently of A); in some embodiments, selection from A and B to be executed (A and B are selectively executed); and in some embodiments, A and B (both A and B are executed). When there are more elements such as A, B, C, etc., similar principle applies.

In some embodiments, depending on the context, the expression such as "A or B" may include the following technical solutions: in some embodiments, A (A is executed independently of B); in some embodiments, B (B is executed independently of A); and in some embodiments, selection from A and B to be executed (A and B are selectively executed). When there are more elements such as A, B, C, etc., similar principle applies.

In the embodiments of the present disclosure, the prefixes such as "first", "second" serve solely to distinguish different described objects, and do not impose any restrictions on the position, sequence, priority, quantity, or content of a described object. The statements regarding the described objects should be understood in the context of claims or embodiments, and the prefixes should not be construed as imposing additional limitations. For example, when the described object is "field", the ordinal numbers preceding "field" in "first field" and "second field" do not restrict the positional relationship or sequence between the fields, and "first" and "second" do not limit whether the fields they modify reside within the same message, nor do they limit the chronological order between "first field" and "second field". Similarly, when the described object is "level", the ordinal numbers preceding "level" in "first level" and "second level" do not restrict the priority between levels. Furthermore, the quantity of the described object is not limited by the ordinal number, and it may be one or more. Taking "first device" as an example, the quantity of "devices" may be one or more. Furthermore, the objects modified by different prefixes may be the same or different. For example, when the described object is "device", "first device" and "second device" may be the same device or different devices, and the types thereof may be the same or different. For another example, when the described object is "information", "first information" and "second information" may be the same information or different information, and the contents thereof may be the same or different.

In some embodiments, the expressions such as "including A", "containing A", "for indicating A", and "carrying A" may be interpreted as either directly carrying A or indirectly indicating A.

In some embodiments, the terms such as "...", "determining...", "in the case of...", "at the time of...", "when...", and "if..." may be used interchangeably.

In some embodiments, the terms such as "greater than", "greater than or equal to", "not less than", "more than", "more than or equal to", "not fewer than", "higher than", "higher than or equal to", "not less than" and "above" may be used interchangeably, and the terms such as "less than", "less than or equal to", "not greater than", "fewer than", "fewer than or equal to", "not more than", "less than, "less than or equal to", "not higher than" and "below" may be used interchangeably.

In some embodiments, devices etc. may be interpreted as either physical or virtual entities, and the names thereof are not limited to that recited in the embodiments. Terms such as "apparatus", "equipment", "device", "circuit", "network element", "node", "function", "unit", "section", "system", "network", "chip", "chip system", "entity" and "subject" may be interchanged.

In some embodiments, a "network" may be interpreted as devices within a network, such as access network devices, core network devices, etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "service cell", "carrier", "component carrier", "bandwidth part (BWP)", etc. may be interchanged.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. may be interchanged.

In some embodiments, an access network device, a core network device or a network device may be replaced with a terminal. For example, the embodiments of the present disclosure may also be applied to a structure in which communication of an access network device, a core network device or a network device with a terminal is replaced with communication between a plurality of terminals (for example, device-to-device (D2D), vehicle-to-everything (V2X), etc.). In this case, a structure in which the terminal has all or part of the functions of the access network device may also be provided. In addition, terms such as "uplink" and "downlink" may also be replaced with terms corresponding to inter-terminal communication (for example, "side"). For example, uplink channels, downlink channels and the like may be replaced with side channels, and uplink links, downlink links and the like may be replaced with side links.

In some embodiments, a terminal may be replaced with an access network device, a core network device or a network device. In this case, a structure in which the access network device, the core network device or the network device has all or part of the functions of the terminal may also be provided.

In some embodiments, the acquisition of data, information, etc., may comply with the laws and regulations of the local country.

In some embodiments, data, information, etc., may be acquired after the agreement of user.

Furthermore, each element, row, or column in a table in the embodiments of the present disclosure may be implemented as an independent embodiment, and any combination of elements, rows, or columns may also be implemented as an independent embodiment.

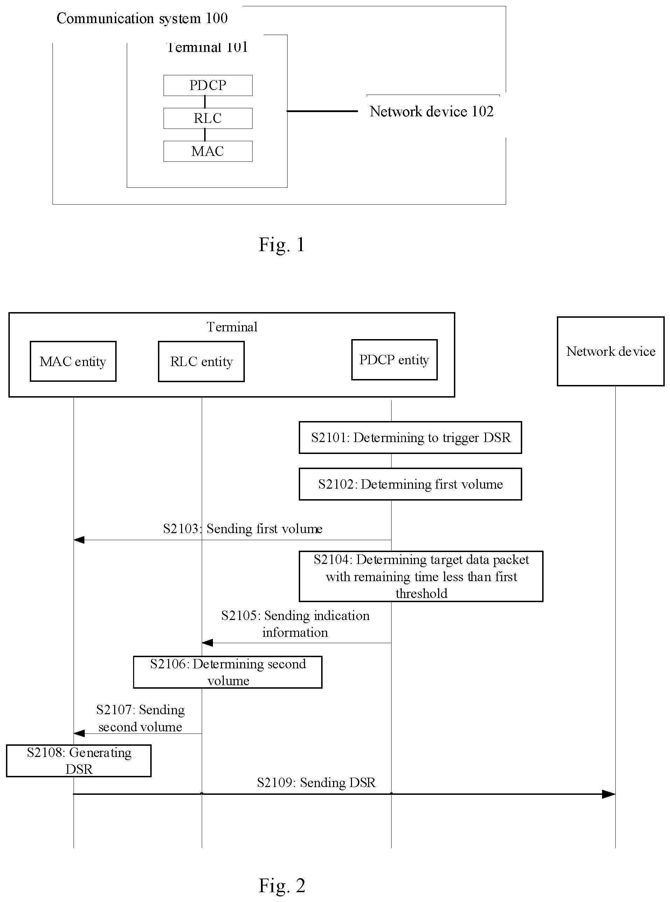

Fig. 1 is a schematic structural diagram of a communication system according to an embodiment of the present disclosure.

As shown in Fig. 1, the communication system 100 includes a terminal 101 and a network device 102.

In some embodiments, the terminal 101 includes, for example, at least one of a mobile phone, a wearable device, an Internet of Things (IoT) device, a communication-capable car, an intelligent car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the terminal 101 is configured to support carrier aggregation and can be connected to a plurality of carrier units of the network device 102, including one primary carrier unit and one or more secondary carrier units.

In some embodiments, the network device 102 may be, for example, an access network device, which is a node or device for accessing a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, and an access node in a Wi-Fi system, but is not limited thereto.

In some embodiments, the technical solutions of the present disclosure are applicable to an Open RAN architecture. In this case, interfaces between access network devices or within an access network device involved in the embodiments of the present disclosure may become internal interfaces of the Open RAN, and processes and information interaction between these internal interfaces may be implemented through software or programs.

In some embodiments, the access network device may be composed of a central unit (CU) and a distributed unit (DU), wherein the CU may also be referred to as a control unit. The CU-DU structure can split the protocol layers of the access network device, with functions of some protocol layers centrally controlled by the CU, and functions of the remaining part or all of the protocol layers distributed in the DU and centrally controlled by the CU, but is not limited thereto.

In some embodiments, the radio interface protocol stacks of the terminal and the access network device both include a Packet Data Convergence Protocol (PDCP) layer, a Radio Link Control (RLC) layer, and a Media Access Control (MAC) layer. Taking the terminal device as a sending end and the access network device as a receiving end as an example, data packets are sequentially transmitted from the PDCP layer of the terminal to the RLC layer, then from the RLC layer to the MAC layer, then from the MAC layer to the PHY layer, and finally sent to the access network device over the air interface.

Data received by the PDCP layer from an upper layer is referred to as a PDCP Service Data Unit (SDU), and data formed into a specific format after processing by the PDCP layer is referred to as a PDCP Protocol Data Unit (PDU). According to specific applications, PDCP PDUs are divided into PDCP data PDUs and PDCP control PDUs. Data received by the RLC layer from the PDCP layer is referred to as an RLC SDU, and data received and processed by the RLC layer may be referred to as an RLC PDU.

It should be understood that the communication system described in the embodiments of the present disclosure is for the purpose of more clearly illustrating the technical solutions of the embodiments of the present disclosure, and does not constitute a limitation on the technical solutions provided by the embodiments of the present disclosure. A person skilled in the art will appreciate that with the evolution of system architectures and the emergence of new service scenarios, the technical solutions provided by the embodiments of the present disclosure are also applicable to similar technical problems.

The following embodiments of the present disclosure may be applied to the communication system 100 shown in Fig. 1 or part of the subjects thereof, but are not limited thereto. Each subject shown in Fig. 1 is an example. The communication system may include all or part of the subjects in Fig. 1, or may include other subjects not shown in Fig. 1. The number and form of each subject are arbitrary. The connection relationship between various subjects is an example. Various subjects may or may not be connected, and the connection may be in any manner, such as direct connection or indirect connection, wired connection or wireless connection.

The embodiments of the present disclosure may be applied to Long Term Evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G New Radio (NR), Future Radio Access (FRA), New-Radio Access Technology (RAT), New Radio (NR), New Radio Access (NX), Future Generation Radio Access (FX), Global System for Mobile Communications (GSM^{®}), CDMA2000, Ultra Mobile Broadband (UMB), IEEE 802.11 (Wi-Fi^{®}), IEEE 802.16 (WiMAX^{®}), IEEE 802.20, Ultra-WideBand (UWB), Bluetooth^{®}, a Public Land Mobile Network (PLMN) network, a Device-to-Device (D2D) system, a Machine to Machine (M2M) system, an Internet of Things (IoT) system, a Vehicle-to-Everything (V2X) system, a system using other communication methods, a next-generation system extended based on them, etc. In addition, a plurality of systems may be combined (for example, a combination of LTE or LTE-A and 5G) for application.

In an XR service, data is usually composed of a plurality of QoS flows with an extremely large traffic volume. Moreover, the service flows of the XR service need to meet certain latency requirements during transmission, especially some data flows need to reach a server simultaneously for decoding, and the delay of any one of the data flows will lead to the failure of joint decoding of a plurality of data flows. However, network scheduling is dynamic. Therefore, in some cases, even if some data flows belong to low-priority logical channels, if some data packets have not been scheduled for a long time, BSR needs to be sent to notify the network as soon as possible. However, according to the existing mechanism, BSR can only be sent when high-priority logical channel data arrives, which cannot meet the requirement of emergency scheduling. Therefore, it is necessary to consider optimizing the emergency scheduling in the XR service.

In some embodiments, the BSR data volume may be calculated at the PDCP layer and the RLC layer respectively.

For the PDCP layer, the following may be counted in the calculation of the PDCP buffer:
PDCP SDUs that have not been packaged in time;
packaged PDCP data PDUs that have not been submitted to lower layers;
PDCP control PDUs; and
for Acknowledged Mode (AM), PDCP SDUs during a reconstruction/data recovery process or an uplink handover process, and data PDUs that are pending for retransmission.

For the RLC layer, the following may be counted in the calculation of the RLC buffer:
RLC SDUs or RLC SDU segments that have not been included in RLC data PDUs in time; and
packaged data PDUs, including data PDUs for initial transmission and data PDUs for retransmission.

In some embodiments, the terminal may report DSR carrying delay information, for example, the remaining time of an uplink data packet is less than a certain threshold because the uplink data has not been scheduled for a long time.

In some embodiments, the remaining time of a data packet is the time until the packet is discarded. For example, the remaining time may be determined according to a discard timer at the PDCP layer.

At the PDCP layer, if DSR is triggered, the data volume of the corresponding SDU or the data PDU associated with the SDU may be counted during DSR reporting and used as the result of the DSR reporting. However, for some SDUs, the data PDUs associated therewith may have been submitted to the RLC layer, and the PDCP layer cannot count this part of the data volume. Meanwhile, the RLC layer does not know which data packets have a remaining time less than the threshold. Therefore, it is necessary to consider a solution to include this part of the data volume in the count.

Fig. 2 is a schematic interaction diagram of an information transmission method according to an embodiment of the present disclosure. As shown in Fig. 2, the embodiment of the present disclosure relates to an information transmission method applied to the communication system 100, and the method includes the following steps.

In step S2101, a PDCP entity of a terminal determines to trigger DSR.

In some embodiments, the terminal may include, but is not limited to, a mobile phone, a wearable device, an IoT device, a vehicle-mounted device, etc.

In some examples, when there is uplink data to be sent, the PDCP entity of the terminal distributes data packets on a data radio bearer to corresponding RLC entities. Specifically, the PDCP entity packages PDCP SDUs received from an upper layer to obtain PDCP data PDUs, and then sends the PDCP data PDUs to the RLC entities. The RLC entity packages the PDCP data PDUs (i.e., RLC SDUs) to obtain RLC data PDUs, and then transmits the RLC data PDUs to the corresponding MAC entity. The packaging process may include header compression, numbering, and encryption.

In some embodiments, the PDCP layer detects a data packet whose remaining time is less than a first threshold and determines to trigger DSR.

In some embodiments, the PDCP layer detects a data packet for which the ratio between the remaining time and the packet delay budget is less than a first ratio and determines to trigger DSR.

In some embodiments, the PDCP layer detects that the number of data packets whose remaining time is less than the first threshold in a target data packet set is greater than a first quantity threshold and determines to trigger DSR.

In some embodiments, the PDCP entity detects a data packet for which the ratio between the remaining time and the packet delay budget is less than a first ratio threshold and determines to trigger DSR.

In some embodiments, the PDCP layer detects that the number of data packets for which the ratio between the remaining time and the packet delay budget is less than the first ratio threshold in the target data packet set is greater than a second quantity threshold and determines to trigger DSR.

For example, the target data packet set may be a data packet set of an XR service.

In some embodiments, the remaining time of the data packet may be duration from the current time to the delay deadline of the data packet.

In some embodiments, the remaining time of the data packet may be a remaining discard timer value associated with the data packet.

For example, the remaining discard timer value associated with the data packet is the timeout threshold of the discard timer associated with the data packet minus the length of time the data packet has been transmitted.

In some embodiments, the PDCP entity may determine the remaining time of the data packet according to the packet delay budget (PDB) of the data packet and the waiting time of the data packet in the buffer of the PDCP entity.

In some embodiments, the "remaining duration" may be interchanged with terms such as "remaining delay budget" and "delay budget margin".

In some embodiments, the data packet whose remaining time is less than the first threshold may include:
a PDCP SDUs that has not been packaged, wherein the remaining time of the PDCP SDU is less than the first threshold;
a PDCP data PDU that has not been sent, wherein the remaining time of the PDCP SDU corresponding to the PDCP data PDU is less than the first threshold; and
a PDCP data PDU that has been sent, wherein the remaining time of the PDCP SDU corresponding to the PDCP data PDU is less than the first threshold.

In some examples, the PDCP entity may determine whether to trigger DSR only for from an upper layer (for example, an RRC layer or an IP layer).

For example, the first service is an XR service, which may include Augmented Reality (AR), Virtual Reality (VR), and/or Cloud gaming, etc.

In some examples, a mapping relationship exists between one PDCP entity and at least one RLC entity.

In some examples, under the XR service, data to be transmitted by the PDCP layer includes PDCP control PDUs and PDCP data PDUs. The PDCP control PDUs are data generated by the PDCP layer, and the PDCP data PDUs are obtained by the PDCP layer processing PDU data packets (i.e., PDCP SDUs) received from an upper layer.

In some examples, the DSR may be reported by the terminal to the network device based on a logical channel or a logical channel group.

In some embodiments, the first threshold is carried in configuration information sent by the network device.

In some embodiments, the network device may be an access network device, which may be a base station, such as a gNB.

In some embodiments, the configuration information may be carried in a first message sent by the network device to the terminal. The first message includes at least one of higher-layer signaling, RRC signaling, a MAC Control Element (CE), or Downlink Control Information (DCI).

In some embodiments, the configuration information is further used to configure a discard timer associated with a PDCP SDU; for example, the configuration information may include a timeout threshold of the discard timer. When the waiting time of a data packet in the buffer exceeds the timeout threshold of the discard timer, the data packet is discarded.

In some embodiments, the timeout thresholds of discard timers associated with different data packets may be the same or different.

In some embodiments, the timeout thresholds of discard timers associated with different data packets in the same data packet set are the same.

In some embodiments, the first threshold may be determined according to a protocol agreement.

In some embodiments, the first threshold is less than the timeout threshold of the discard timer, and the ratio between the first threshold and the timeout threshold of the discard timer may be less than a preset ratio, for example, the preset ratio may be 1/3, 1/4, etc.

In some embodiments, the granularity of the first threshold may include, but is not limited to, being on a per-logical channel (LC) basis, a per-logical channel group (LCG) basis, or a per-terminal basis.

For example, when being on the per-logical channel group (LCG) basis, target data packets corresponding to all logical channels in the logical channel group have the same first threshold.

In some examples, the unit of the remaining time may be milliseconds, such as 0.5 ms or 0.1 ms, which is not specifically limited herein.

In other examples, the unit of the remaining time may be a time slot, a mini-slot, or an OFDM symbol.

In step S2102, the PDCP entity of the terminal determines a first data volume.

In some examples, a data packet used to determine the first data volume may include a PDCP data packet in the buffer of the PDCP entity whose remaining time is less than the first threshold.

In some examples, the data packet used to determine the first data volume may include:
a PDCP SDU that has not been packaged, wherein the remaining time of the PDCP SDU is less than the first threshold; and
a PDCP data PDU that has not been sent, wherein the remaining time of the PDCP data PDU is less than the first threshold.

In some examples, the PDCP entity may count the PDCP SDU that has not been packaged and the PDCP data PDU that has not been sent to obtain the first data volume.

In some examples, the first data volume is used to generate DSR.

In some embodiments, the first data volume is used to generate the data volume of the DSR.

For example, the PDCP entity of the terminal sends the first data volume to the MAC entity corresponding to the RLC entity, and the MAC entity generates DSR according to the first data volume and reports it to the network device.

In some embodiments, the first data volume is used together with a second data volume sent by the RLC entity to the MAC entity to generate the data volume of the DSR. For example, the sum of the second data volume and the first data volume is used as the data volume of the DSR.

In step S2103, the PDCP entity of the terminal sends the first data volume.

In some examples, the PDCP entity of the terminal sends the first data volume to the MAC entity corresponding to the RLC entity.

In some examples, the MAC entity of the terminal receives the first data volume sent by the PDCP entity.

In step S2104, the PDCP entity of the terminal determines a target data packet with a remaining time less than the first threshold.

In some embodiments, the remaining time of the target data packet is a remaining discard timer value associated with the target data packet.

In some embodiments, the target data packet with the remaining time less than the first threshold includes one of:
a first PDCP SDU with a remaining time less than the first threshold, wherein a first PDCP data PDU is being or has been sent to the RLC entity.

In some examples, the target data packet is configured for the RLC entity to determine a first data packet for which a data volume is to be counted, and the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

Here, the data volume of the first data packet may be used as the second data volume to generate the DSR together with the first data volume.

In some embodiments, the service type corresponding to the target data packet is an XR service.

In some embodiments, in a data packet set to which the target data packet belongs, expiration times of discard timers corresponding to different data packets are same.

In some embodiments, the data packet set may correspond to an XR data flow.

In some embodiments, different data packets in the data packet set may have different priorities.

Here, the receiving time of data packets with different priorities received by the PDCP entity may be different. For example, the receiving time of high-priority data packet is earlier than that of low-priority data packet.

In some examples, the timeout thresholds of discard timers associated with different data packets in the same data packet set are the same.

In some embodiments, the target data packet is a data packet whose remaining time is higher than a second threshold and less than the first threshold.

In some embodiments, if the remaining time of a PDCP data packet is equal to 0 (for example, the discard timer associated with the PDCP data packet expires), the PDCP data packet is discarded. The PDCP data packet may be a PDCP SDU or a PDCP data PDU.

In other embodiments, if the remaining time of a PDCP SDU is equal to 0 and the PDCP data PDU associated with the PDCP SDU has been sent to the RLC entity, the PDCP entity may send indication information for the PDCP SDU to indicate that the remaining time of the PDCP data PDU associated with the PDCP SDU is equal to 0. In this example, the RLC entity may discard the RLC data packet associated with the PDCP SDU. The RLC data packet may be an RLC SDU or an RLC data PDU.

In step S2105, the PDCP entity of the terminal sends indication information to the RLC entity.

In some embodiments, the RLC entity of the terminal receives the indication information sent by the PDCP entity.

In some embodiments, when the PDCP entity determines the target data packet whose remaining time is less than the first threshold, it sends the indication information to the RLC entity.

In some embodiments, the indication information is configured to indicate the target data packet with the remaining time less than the first threshold.

In some embodiments, the indication information includes at least one of:
an identifier of the target data packet; or
the remaining time of the target data packet.

In some examples, the identifier of the target data packet may be a sequence number of the target data packet.

In some embodiments, the PDCP entity of the terminal may send the indication information to a target RLC entity. The target RLC entity is the RLC entity that has received the data PDU corresponding to the target data packet.

In some embodiments, the indication information may be included in a header of the PDCP data PDU.

In other embodiments, the PDCP entity of the terminal sends a first PDCP control PDU to the RLC entity as the indication information, and the first PDCP control PDU may be a PDCP control PDU dedicated to transmitting the indication information.

In step S2106, the RLC entity of the terminal determines a second data volume.

In some embodiments, the RLC entity of the terminal determines the second data volume according to the indication information.

In some embodiments, a data packet used to determine the second data volume may include an RLC data packet in the buffer of the RLC entity whose remaining time is less than the first threshold.

In some embodiments, the RLC entity of the terminal determining the second data volume according to the indication information may include:
the RLC entity determining a first data packet for which the data volume is to be counted according to the target data packet indicated by the indication information, and counting the first data packet for which the data volume is to be counted to obtain the second data volume.

For example, the RLC entity determines the first data packet for which the data volume is to be counted according to the identifier of the target data packet. Here, the first data packet is an RLC data packet.

In some embodiments, the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

Here, the RLC SDU segment may be a segment of an RLC SDU divided to adapt to the size of an RLC data PDU specified by the next protocol layer (MAC layer), that is, one RLC SDU may be divided into a plurality of RLC SDU segments, and one RLC SDU segment may be processed into one RLC data PDU.

Here, the mode for the terminal to perform repeated data transmission may include initial transmission and retransmission. In the initial transmission or retransmission mode, the terminal may repeatedly transmit the same data multiple times. The sum of the number of repeated transmissions for initial transmission and the number of repeated transmissions for retransmission is less than or equal to the total number of transmissions indicated by the repeated transmission indication information, which may be sent by the network device to the terminal.

In some examples, the second data volume is used to generate DSR.

In some embodiments, the data volume of the first data packet is used to generate the data volume of the DSR.

For example, the RLC entity of the terminal sends the second data volume to the MAC entity, and the MAC entity generates DSR according to the second data volume and reports it to the network device.

In some embodiments, the data volume of the first data packet is used as the second data volume, which is combined with the first data volume sent by the PDCP entity to the MAC entity to generate the data volume of the DSR. For example, the sum of the second data volume and the first data volume is used as the data volume of the DSR.

In some examples, the DSR may include a total data packet volume determined based on the first data volume and the second data volume.

In step S2107, the RLC entity of the terminal sends the second data volume.

In some examples, the RLC entity of the terminal sends the second data volume to the MAC entity.

In some examples, the MAC entity of the terminal receives the second data volume sent by the RLC entity.

In step S2108, the MAC entity of the terminal generates DSR.

In some embodiments, after receiving the first data volume from the PDCP entity and the second data volume from the RLC entity, the MAC entity determines a total data packet volume according to the first data volume and the second data volume, and generates DSR including the total data packet volume.

Here, the total data packet volume may be used as the to-be-transmitted uplink data volume for a logical channel or a logical channel group.

In some embodiments, after the PDCP entity sends the first PDCP data PDU corresponding to the first PDCP SDU to the RLC entity, if the remaining time of the first PDCP SDU is less than the first threshold when DSR reporting is triggered, the data volume of the RLC SDU corresponding to the first PDCP SDU (i.e., the first PDCP data PDU sent by the PDCP entity to the RLC entity) or the data volume of the RLC PDU associated with the RLC SDU is to be counted during DSR reporting.

In some embodiments, the PDCP entity sends PDCP data PDUs respectively corresponding to a plurality of PDCP SDUs to different RLC entities. If the remaining time of each of the plurality of PDCP SDUs is less than the first threshold when DSR reporting is triggered, the data volume of the corresponding RLC SDU or the data volume of the RLC data PDU associated with the RLC SDU in different RLC entities is counted during DSR reporting.

In step S2109, the MAC entity of the terminal sends the DSR to the network device.

In some embodiments, the network device receives the DSR sent by the MAC entity of the terminal.

In some embodiments, the total data packet volume in the DSR is used by the network device to allocate an uplink resource to the terminal. The uplink resource is used by the terminal for transmitting uplink data.

In some embodiments, the DSR may be reported to the network device in the form of a MAC CE.

In some embodiments, the term "information" may be interchanged with terms such as "message", "signal", "signaling", "report", "configuration", "indication", "instruction", "command", "channel", "parameter", "field", and "data".

In some embodiments, the term "send" may be interchanged with terms such as "transmit", "report", and "transfer".

The information transmission method involved in the embodiments of the present disclosure may include at least one of steps S2101 to S2109. For example, step S2101 may be implemented as an independent embodiment, step S2105 may be implemented as an independent embodiment, and step S2106 may be implemented as an independent embodiment. For example, steps S2104 to S2107 may be implemented as an independent embodiment, and steps S2101 to S2109 may be implemented as an independent embodiment, but are not limited thereto.

In some embodiments, steps S2102 and S2103 are optional and may be omitted or replaced in different embodiments.

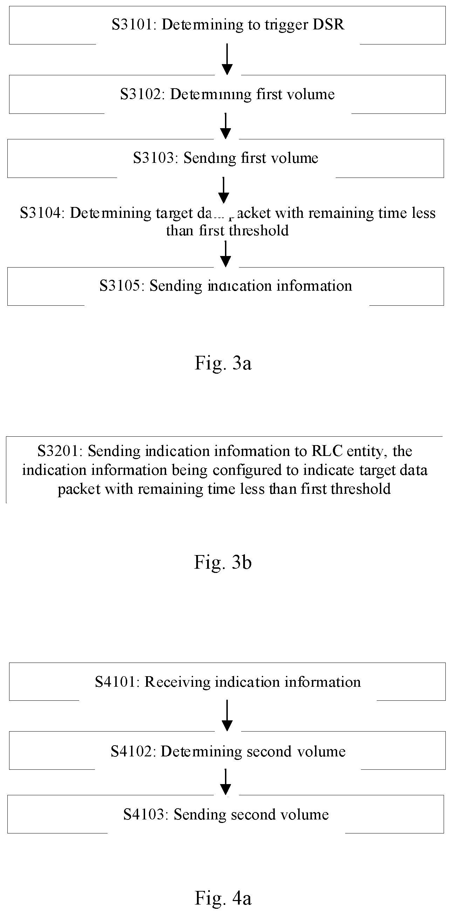

Fig. 3a is a schematic flow chart of an information transmission method according to an embodiment of the present disclosure. As shown in Fig. 3a, the embodiments of the present disclosure relate to an information transmission method executed by a PDCP entity of a terminal, and the method includes the following steps.

In step S3101, it determines to trigger DSR.

In some embodiments, the optional implementation of step S3101 may refer to the optional implementation of step S2101 in Fig. 2 and other related parts of the embodiment involved in Fig. 2, which will not be repeated here.

In step S3102, it determines a first data volume.

In some embodiments, the optional implementation of step S3102 may refer to the optional implementation of step S2102 in Fig. 2 and other related parts of the embodiment involved in Fig. 2, which will not be repeated here.

In step S3103, it sends the first data volume.

In some embodiments, the optional implementation of step S3103 may refer to the optional implementation of step S2103 in Fig. 2 and other related parts of the embodiment involved in Fig. 2, which will not be repeated here.

In some embodiments, the PDCP entity of the terminal sends the first data volume to the MAC entity, but is not limited thereto, and may also send the first data volume to other subjects.

In step S3104, it determines a target data packet with a remaining time less than a first threshold.

In some embodiments, the optional implementation of step S3104 may refer to the optional implementation of step S2104 in Fig. 2 and other related parts of the embodiment involved in Fig. 2, which will not be repeated here.

In step S3105, it sends indication information.

In some embodiments, the optional implementation of step S3105 may refer to the optional implementation of step S2105 in Fig. 2 and other related parts of the embodiment involved in Fig. 2, which will not be repeated here.

In some embodiments, the PDCP entity of the terminal sends the indication information to the RLC entity, but is not limited thereto, and may also send the indication information to other subjects.

The information processing method involved in the embodiments of the present disclosure may include at least one of steps S3101 to S3105. For example, step S3101 may be implemented as an independent embodiment, and step S3105 may be implemented as an independent embodiment. For example, steps S3101 to S3103 may be implemented as an independent embodiment, and step S3101 combined with steps S3104 to S3105 may be implemented as an independent embodiment, but is not limited thereto.

In some embodiments, steps S3102 and S3103 are optional and may be omitted or replaced in different embodiments.

Fig. 3b is a schematic flow chart of an information transmission method according to an embodiment of the present disclosure. As shown in Fig. 3b, the embodiments of the present disclosure relate to an information transmission method executed by a PDCP entity of a terminal, and the method includes the following steps:
step S3201, sending indication information to an RLC entity, wherein the indication information is configured to indicate a target data packet with a remaining time less than a first threshold.

In some embodiments, the optional implementation of step S3201 may refer to the optional implementations of step S2105 in Fig. 2 and step S3105 in Fig. 3a, and other related parts of the embodiments involved in Fig. 2 and Fig. 3a, which will not be repeated here.

In some embodiments, the method further includes:
step S3202, detecting, by the PDCP entity, a target data packet with a remaining time less than the first threshold, and determining to trigger Delay Status Reporting (DSR).

In some embodiments, the optional implementation of step S3202 may refer to the optional implementations of step S2101 in Fig. 2 and step S3101 in Fig. 3a, and other related parts of the embodiments involved in Fig. 2 and Fig. 3a, which will not be repeated here.

In some embodiments, the remaining time of the target data packet is a remaining discard timer value associated with the target data packet.

In some embodiments, the target data packet with the remaining time less than the first threshold includes:
a first PDCP SDU with a remaining time less than the first threshold, wherein a first PDCP data PDU associated with the first PDCP SDU is being or has been sent to the RLC entity.

In some embodiments, the target data packet is configured for the RLC entity to determine a first data packet for which a data volume is to be counted, and the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In some embodiments, the data volume of the first data packet is configured to generate a data volume of DSR.

In some embodiments, the indication information includes at least one of:
an identifier of the target data packet; or
the remaining time of the target data packet.

In some embodiments, in a data packet set to which the target data packet belongs, expiration times of discard timers associated with different data packets are same.

In the embodiments of the present disclosure, part or all of the steps and their optional implementations may be arbitrarily combined with part or all of the steps in other embodiments, and may also be arbitrarily combined with the optional implementations of other embodiments.

Fig. 4a is a schematic flow chart of an information transmission method according to an embodiment of the present disclosure. As shown in Fig. 4a, the embodiments of the present disclosure relate to an information transmission method executed by an RLC entity of a terminal, and the method includes the following steps.

In step S4101, it receives indication information.

In some embodiments, the optional implementation of step S4101 may refer to the optional implementation of step S2105 in Fig. 2 and other related parts of the embodiment involved in Fig. 2, which will not be repeated here.

In some embodiments, the RLC entity of the terminal may receive the indication information sent by the PDCP entity of the terminal, but is not limited thereto, and may also receive the indication information sent by other subjects.

In step S4102, it determines a second data volume.

In some embodiments, the optional implementation of step S4102 may refer to the optional implementation of step S2106 in Fig. 2 and other related parts of the embodiment involved in Fig. 2, which will not be repeated here.

In step S4103, it sends the second data volume.

In some embodiments, the optional implementation of step S4103 may refer to the optional implementation of step S2107 in Fig. 2 and other related parts of the embodiment involved in Fig. 2, which will not be repeated here.

In some embodiments, the RLC entity of the terminal sends the second data volume to the MAC entity, but is not limited thereto, and may also send the second data volume to other subjects.

The information processing method involved in the embodiments of the present disclosure may include at least one of steps S4101 to S4103. For example, step S4101 may be implemented as an independent embodiment. For example, steps S4101 to S4103 may be implemented as an independent embodiment, but is not limited thereto.

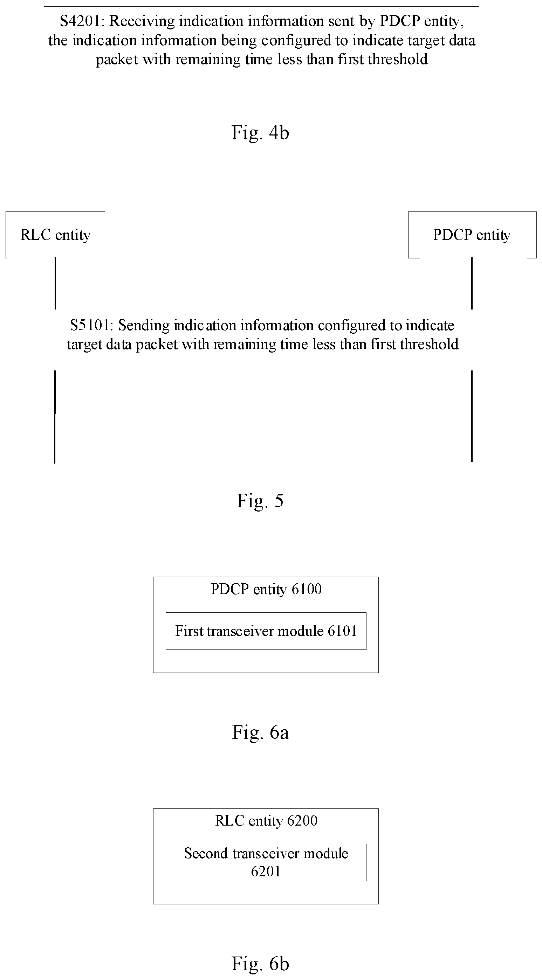

Fig. 4b is a schematic flow chart of an information transmission method according to an embodiment of the present disclosure. As shown in Fig. 4b, the embodiments of the present disclosure relate to an information transmission method executed by an RLC entity of a terminal, and the method includes:
step S4201, receiving indication information sent by a PDCP entity, wherein the indication information is configured to indicate a target data packet with a remaining time less than a first threshold.

In some embodiments, the optional implementation of step S4201 may refer to the optional implementations of step S2105 in Fig. 2 and step S4101 in Fig. 4a, and other related parts of the embodiments involved in Fig. 2 and Fig. 4a, which will not be repeated here.

In some embodiments, the remaining time of the target data packet is a remaining discard timer value associated with the target data packet.

In some embodiments, the target data packet with the remaining time less than the first threshold includes:
a first PDCP SDU with a remaining time less than the first threshold, wherein a first PDCP data PDU is being or has been sent to the RLC entity; and
the first PDCP data PDU that is being or has been sent to the RLC entity.

In some embodiments, the method further includes:
step S4202, determining, by the RLC entity according to the target data packet indicated by the indication information, a first data packet for which a data volume is to be counted, wherein the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In some embodiments, the optional implementation of step S4202 may refer to the optional implementations of step S2106 in Fig. 2 and step S4102 in Fig. 4a, and other related parts of the embodiments involved in Fig. 2 and Fig. 4a, which will not be repeated here.

In some embodiments, the data volume of the first data packet is configured to generate a data volume of DSR.

In some embodiments, the indication information includes at least one of:
an identifier of the target data packet;
the remaining time of the target data packet.

In some embodiments, in a data packet set to which the target data packet belongs, expiration times of discard timers corresponding to different data packets are same.

In the embodiments of the present disclosure, part or all of the steps and their optional implementations may be arbitrarily combined with part or all of the steps in other embodiments, and may also be arbitrarily combined with the optional implementations of other embodiments.

Fig. 5 is a schematic interaction diagram of an information transmission method according to an embodiment of the present disclosure. As shown in Fig. 5, the embodiments of the present disclosure relate to an information transmission method applied to a terminal, and the method includes:
step S5101, a PDCP entity sending indication information to an RLC entity, wherein the indication information is configured to indicate a target data packet with a remaining time less than a first threshold.

In some embodiments, the optional implementation of step S5101 may refer to the optional implementations of step S2105 in Fig. 2, step S3105 in Fig. 3a, and step S4101 in Fig. 4a, and other related parts of the embodiments involved in Fig. 2, Fig. 3a, and Fig. 4a, which will not be repeated here.

In some embodiments, the method further includes:
step S5202, the PDCP entity detecting the target data packet with the remaining time less than the first threshold, and determining to trigger Delay Status Reporting (DSR).

In some embodiments, the optional implementation of step S5202 may refer to the optional implementations of step S2101 in Fig. 2 and step S3101 in Fig. 3a, and other related parts of the embodiments involved in Fig. 2 and Fig. 3a, which will not be repeated here.

In some embodiments, the remaining time of the target data packet is a remaining discard timer value associated with the target data packet.

In some embodiments, the target data packet with the remaining time less than the first threshold includes:
a first PDCP SDU with a remaining time less than the first threshold, wherein a first PDCP data PDU is being or has been sent to the RLC entity; and
the first PDCP data PDU that is being or has been sent to the RLC entity.

In some embodiments, the method further includes:
step S5203, an RLC entity determining, according to the target data packet indicated by the indication information, a first data packet for which a data volume is to be counted, wherein the first data packet includes at least one of:
an RLC SDU or an RLC SDU segment of the RLC SDU that has not been included in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

In some embodiments, the optional implementation of step S5203 may refer to the optional implementations of step S2106 in Fig. 2 and step S4102 in Fig. 4a, and other related parts of the embodiments involved in Fig. 2 and Fig. 4a, which will not be repeated here.

In some embodiments, the data volume of the first data packet is configured to generate a data volume of DSR.

In some embodiments, the indication information includes at least one of:
an identifier of the target data packet; or
the remaining time of the target data packet.

In some embodiments, in a data packet set to which the target data packet belongs, expiration times of discard timers corresponding to different data packets are same.

In the embodiments of the present disclosure, part or all of the steps and their optional implementations may be arbitrarily combined with part or all of the steps in other embodiments, and may also be arbitrarily combined with the optional implementations of other embodiments.

The embodiments of the present disclosure provide an information transmission method, which adopts a scheme of notifying an RLC layer by a PDCP layer to realize enhanced uplink scheduling.

The method may include:
If a PDCP layer of a terminal detects that a remaining time of a data packet is less than a threshold, the PDCP layer sending an indication message to an RLC layer.

In some embodiments, when DSR is triggered, if the PDCP layer of the terminal detects that the remaining time of the data packet is less than the threshold, the PDCP layer sends the indication message to the RLC layer.

As an embodiment, the trigger condition for the DSR is that: the terminal detects that there is a specific data packet or data packet set in a logical channel or a logical channel group, and the remaining time of the specific data packet or data packet set is less than a predetermined threshold (for example, the first threshold in the foregoing embodiments).

In some embodiments, if the PDCP layer of the terminal detects that the remaining time of the data packet is less than the threshold, the PDCP layer sends the indication message to the RLC layer, which includes at least one of:
for a PDCP SDU, when detecting that the remaining discard timer value associated with the SDU is less than the threshold, considering the SDU and/or the associated PDCP data PDU as candidate data for triggering DSR reporting; or
for a PDCP SDU, when detecting that the remaining discard timer value associated with the SDU is less than the threshold, and the PDCP data PDU corresponding to the SDU has been sent to the RLC layer, sending the indication message to the RLC layer.

In some embodiments, if the PDCP layer of the terminal detects that the remaining time of the data packet is less than the threshold, the PDCP layer sends the indication message to the RLC layer, which includes at least one of:
the PDCP entity sending indication information to the RLC entity, wherein the indication information is used to indicate that there is data triggering the DSR; or
the PDCP entity sends indication information to the RLC entity, wherein the indication information is used to indicate that for a specific RLC SDU, the remaining discard timer value associated with the SDU is less than the threshold.

In some embodiments, the method may further include that:
if the RLC layer detects the indication information received from the PDCP (for example, first indication information), it may perform the following operations:
when the RLC layer determines a data packet (RLC SDU) for which the remaining discard timer value associated with the SDU is less than the threshold, the RLC layer determines the size of the associated data volume for DSR reporting, and the counted data packet is the RLC SDU or the RLC data PDU associated with the RLC SDU.

As an embodiment, the RLC layer may count the following data packets into the DSR buffer calculation:
an RLC SDU that has not been included in an RLC data PDU, wherein the remaining time of the RLC SDU is less than the threshold;
an RLC SDU segment that has not been included in an RLC data PDU, wherein the remaining time of the RLC SDU segment is less than the threshold;
a packaged RLC data PDU, including an RLC data PDU for initial transmission, wherein the remaining time thereof is less than the threshold;
a packaged RLC data PDU, including an RLC data PDU for retransmission, wherein the remaining time thereof is less than the threshold.

In some embodiments, when the remaining discard timer value associated with the PDCP SDU is less than the threshold (for example, the first threshold in the foregoing embodiments), the PDCP entity considers the PDCP SDU and the corresponding PDCP data PDU as a delay-critical PDCP data volume. If the corresponding PDCP data PDU has been submitted to the lower layer, an indication may be sent to the lower layer.

Here, the PDCP SDU is a data packet received from an upper layer and associated with a discard timer. The PDCP SDU is processed by the PDCP layer into a PDCP data PDU, and the remaining time corresponding to the PDCP data PDU can be obtained from the discard timer associated with the PDCP SDU.

In some embodiments, to report the MAC delay status, or when the upper layer (for example, the PDCP layer) indicates that the remaining discard timer value of a certain RLC SDU is less than the threshold, the RLC entity considers the following data volume as a delay-critical RLC data volume:
an RLC SDU or RLC SDU segment that has not been included in an RLC data PDU, wherein the remaining discard timer value thereof is less than the threshold;
an RLC data PDU that is pending for initial transmission, wherein the remaining discard timer value thereof is less than the threshold; and
an RLC data PDU that is pending for retransmission (RLC AM), wherein the remaining discard timer value thereof is less than the threshold.

The embodiments of the present disclosure further provide a device for implementing any of the above information transmission methods. For example, an information transmission device is provided, which includes a unit or module for implementing each step executed by the terminal in any of the above information transmission methods. For another example, another information transmission device is provided, which includes a unit or module for implementing each step executed by the network device in any of the above methods.

It should be understood that the division of each unit or module within the above device represents a logical functional partitioning. In practical implementation, these units or modules may be all or partially integrated into a single physical entity, or physically separated. Furthermore, the unit or module within the device may be implemented in a form in which a processor invokes software. For example, the device may include a processor connected to a memory having instructions stored thereon. The processor invokes the instructions stored in the memory to implement any of the above methods or the function of each unit or module within the device. The processor may be a general-purpose processor, such as a central processing unit (CPU) or microprocessor. The memory may be a memory within or outside the device. Alternatively, the unit or module within the device may be implemented in a form of a hardware circuit, and the function of some or all units or modules may be achieved by designing the hardware circuit. Such hardware circuit may be understood as one or more processors. For example, in an implementation, the hardware circuit may be an application-specific integrated circuit (ASIC), and the function of some or all units or modules may be achieved by designing the component logical relationship within the circuit. For another example, in another implementation, the above hardware circuit may be implemented through a programmable logic device (PLD). Taking a Field Programmable Gate Array (FPGA) as an example, it may include a substantial number of logic gate circuits, and by configuring the connection between these logic gate circuits via a configuration file, the function of some or all of the above units or modules may be achieved. All units or modules of the above device may be implemented entirely in the form in which a processor invokes software, entirely in the form of hardware circuit, or partially in the form in which the processor invokes software with the remaining portion implemented in the form of hardware circuit.

In an embodiment of the present disclosure, the processor is a circuit having a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement certain functions through the logical relationship of hardware circuit. The above logical relationship of hardware circuit is fixed or reconfigurable. For example, the processor is a hardware circuit implemented by application-specific integrated circuit (ASIC) or programmable logic device (PLD), such as FPGA. Within a reconfigurable hardware circuit, the processor loads a configuration file to implement hardware circuit configuration, which process may be understood as that the processor loads instructions to implement the function of some or all of the above units or modules. Furthermore, it may be a hardware circuit designed for artificial intelligence, which may be understood as an ASIC, such as Neural Network Processing Unit (NPU), Tensor Processing Unit (TPU), or Deep Learning Processing Unit (DPU).

Fig. 6a is a schematic structural diagram of a PDCP entity provided by an embodiment of the present disclosure. As shown in Fig. 6a, the PDCP entity 6100 includes a first transceiver module 6101. Optionally, the first transceiver module 6101 is configured to execute steps related to information reception or information transmission performed by the PDCP entity of the terminal in any of the above information transmission methods, which will not be repeated here. Optionally, the PDCP entity 6100 further includes a first determining module 6102, and the first determining module 6102 is configured to execute steps related to determination performed by the PDCP entity of the terminal in any of the above information transmission methods, which will not be repeated here.

Fig. 6b is a schematic structural diagram of an RLC entity provided by an embodiment of the present disclosure. As shown in Fig. 6b, the RLC entity 6200 includes a second transceiver module 6201. Optionally, the second transceiver module 6201 is configured to execute steps related to information reception or information transmission performed by the RLC entity of the terminal in any of the above information transmission methods, which will not be repeated here. Optionally, the RLC entity 6200 further includes a second determining module 6202, and the second determining module 6202 is configured to execute steps related to determination performed by the RLC entity of the terminal in any of the above information transmission methods, which will not be repeated here.

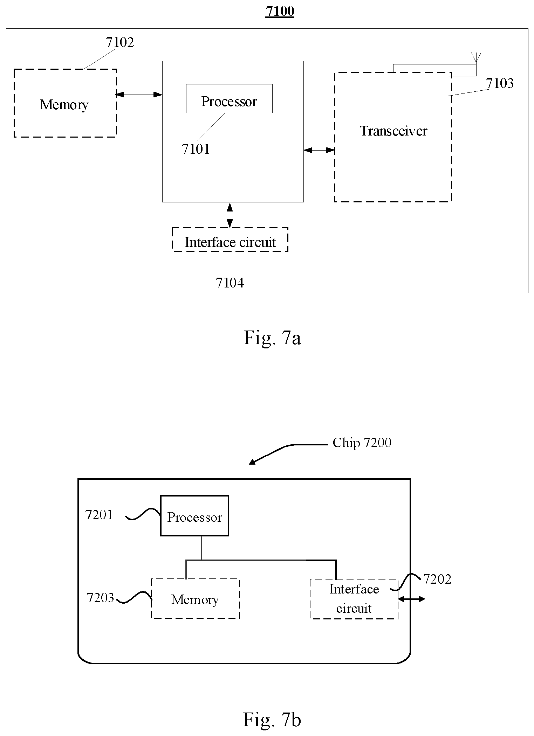

Fig. 7a is a schematic structural diagram of a communication device 7100 provided by an embodiment of the present disclosure. The communication device 7100 may be a terminal (such as a user equipment) or a chip, a chip system, or a processor that supports the terminal to implement any of the above methods. The communication device 7100 may be used to implement the information transmission method described in the above method embodiment, and specific reference may be made to the description in the above method embodiment.

As shown in Fig. 7a, the communication device 7100 includes one or more processors 7101. The processor 7101 may be a general-purpose processor or a special-purpose processor, such as a baseband processor or a central processing unit. The baseband processor may be used to process communication protocols and communication data, and the central processing unit may be used to control a communication device (such as a base station, a baseband chip, a terminal device, a terminal device chip, a DU, or a CU), execute programs, and process program data. The processor 7101 is configured to invoke instructions to cause the communication device 7100 to execute any of the above communication methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. When the communication device 7100 includes one or more transceivers 7103, the communication steps such as sending and receiving in the above method are executed by the transceivers 7103, and other steps are executed by the processor 7101.

In some embodiments, the transceiver may include a receiver and a sender, which may be separate or integrated. Optionally, terms such as transceiver, transceiver unit, transceiver machine, and transceiver circuit may be interchanged, terms such as sender, sending unit, sending machine, and sending circuit may be interchanged, and terms such as receiver, receiving unit, receiver machine, and receiving circuit may be interchanged.

Optionally, the communication device 7100 further includes one or more interface circuits 7104 connected to the memory 7102. The interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

The communication device 7100 described in the above embodiment may be a network device or a terminal, but the scope of the communication device 7100 described in the present disclosure is not limited thereto, and the structure of the communication device 7100 may not be limited to Fig. 7a. The communication device may be an independent device or a part of a larger device. For example, the communication device may be: (1) an independent Integrated Circuit (IC), or a chip, or a chip system or subsystem; (2) a set with one or more ICs, optionally, the IC set may also include a storage component for storing data and programs; (3) an ASIC, such as a Modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

Fig. 7b is a schematic structural diagram of a chip 7200 provided by an embodiment of the present disclosure. For the case where the communication device 7100 may be a chip or a chip system, reference may be made to the schematic structural diagram of the chip 7200 shown in Fig. 7b, but is not limited thereto.

The chip 7200 includes one or more processors 7201 configured to invoke instructions to cause the chip 7200 to execute any of the above communication methods.

In some embodiments, the chip 7200 further includes one or more interface circuits 7202 connected to a memory 7203. The interface circuit 7202 may be used to receive signals from the memory 7203 or other devices, and the interface circuit 7202 may be used to send signals to the memory 7203 or other devices. For example, the interface circuit 7202 may read instructions stored in the memory 7203 and send the instructions to the processor 7201. Optionally, terms such as interface circuit, interface, transceiver pin, and transceiver may be interchanged.

In some embodiments, the chip 7200 further includes one or more memories 7203 for storing instructions. Optionally, all or part of the memories 7203 may be located outside the chip 7200.

The present disclosure further provides a storage medium storing instructions that, when run on the communication device 7100, cause the communication device 7100 to execute any of the above methods. Optionally, the storage medium is an electronic storage medium. Optionally, the storage medium is a computer-readable storage medium, but may also be a storage medium readable by other devices. Optionally, the storage medium may be a nontransitory storage medium, but may also be a transitory storage medium.

The present disclosure further provides a program product that, when executed by the communication device 7100, causes the communication device 7100 to execute any of the above communication methods. Optionally, the program product is a computer program product.

The present disclosure further provides a computer program that, when runs on a computer, causes the computer to execute any of the above communication methods.

A person skilled in the art will readily conceive of other implementations of the present disclosure after considering the specification and practicing the invention disclosed herein. The present disclosure is intended to cover any modifications, uses, or adaptive changes of the present disclosure, which follow the general principles of the present disclosure and include common knowledge or conventional technical means in the technical field not disclosed in the present disclosure. The specification and embodiments are only regarded as exemplary, and the true scope and spirit of the present disclosure are indicated by the following claims.

It should be understood that the present disclosure is not limited to the precise structure described above and shown in the accompanying drawings, and various modifications and changes may be made without departing from the scope thereof. The scope of the present disclosure is only limited by the appended claims.

## Claims

1. An information transmission method, applied to a Packet Data Convergence Protocol, PDCP, entity, the method comprising:
sending indication information to a Radio Link Control, RLC, entity, wherein the indication information is configured to indicate a target data packet with a remaining time less than a first threshold.

2. The method according to claim 1, further comprising:
detecting the target data packet with the remaining time less than the first threshold, and determining to trigger Delay Status Reporting, DSR.

3. The method according to claim 1 or 2, wherein the remaining time of the target data packet is a remaining discard timer value associated with the target data packet.

4. The method according to any one of claims 1 to 3, wherein the target data packet with the remaining time less than the first threshold comprises:
a first PDCP Service Data Unit, SDU, with a remaining time less than the first threshold, wherein a first PDCP data Protocol Data Unit, PDU, associated with the first PDCP SDU is being or has been sent to the RLC entity.

5. The method according to any one of claims 1 to 4, wherein the target data packet is configured for the RLC entity to determine a first data packet for which a data volume is to be counted, and the first data packet comprises at least one of:
an RLC SDU or an RLC SDU segment of the RLC SDU that has not been comprised in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

6. The method according to claim 5, wherein the data volume of the first data packet is configured to generate a data volume of DSR.

7. The method according to any one of claims 1 to 6, wherein the indication information comprises at least one of:
an identifier of the target data packet; or
the remaining time of the target data packet.

8. The method according to any one of claims 1 to 7, wherein in a data packet set to which the target data packet belongs, expiration times of discard timers associated with different data packets are same.

9. An information transmission method, applied to a Radio Link Control, RLC, entity, the method comprising:
receiving indication information sent by a Packet Data Convergence Protocol, PDCP, entity, wherein the indication information is configured to indicate a target data packet with a remaining time less than a first threshold.

10. The method according to claim 9, wherein the remaining time of the target data packet is a remaining discard timer value associated with the target data packet.

11. The method according to claim 9 or 10, wherein the target data packet with the remaining time less than the first threshold comprises:
a first PDCP Service Data Unit, SDU, with a remaining time less than the first threshold, wherein a first PDCP data Protocol Data Unit, PDU, is being or has been sent to the RLC entity; and
the first PDCP data PDU that is being or has been sent to the RLC entity.

12. The method according to any one of claims 9 to 11, further comprising:
determining, by the RLC entity according to the target data packet indicated by the indication information, a first data packet for which a data volume is to be counted, wherein the first data packet comprises at least one of:
an RLC SDU or an RLC SDU segment of the RLC SDU that has not been comprised in an RLC data PDU, wherein a remaining time of the RLC SDU is less than the first threshold;
an RLC data PDU that is pending for initial transmission, wherein a remaining time of the RLC data PDU is less than the first threshold; or
an RLC data PDU that is pending for retransmission, wherein a remaining time of the RLC data PDU is less than the first threshold.

13. The method according to claim 12, wherein the data volume of the first data packet is configured to generate a data volume of DSR.

14. The method according to any one of claims 9 to 13, wherein the indication information comprises at least one of:
an identifier of the target data packet; or
the remaining time of the target data packet.

15. The method according to any one of claims 9 to 14, wherein in a data packet set to which the target data packet belongs, expiration times of discard timers corresponding to different data packets are same.

16. A PDCP entity, comprising:
a first transceiver module configured to send indication information to a Radio Link Control (RLC) entity, wherein the indication information is configured to indicate a target data packet with a remaining time less than a first threshold.

17. An RLC entity, comprising:
a second transceiver module configured to receive indication information sent by a Packet Data Convergence Protocol (PDCP) entity, wherein the indication information is configured to indicate a target data packet with a remaining time less than a first threshold.

18. A terminal comprising a PDCP entity and an RLC entity, wherein
the PDCP entity is configured to send indication information to the RLC entity, and the indication information is configured to indicate a target data packet with a remaining time less than a first threshold; and
the RLC entity is configured to receive the indication information sent by the PDCP entity, and the indication information is configured to indicate the target data packet with the remaining time less than the first threshold.

19. A communication device, comprising:
one or more processors,
wherein the processor is configured to invoke instructions to cause the communication device to execute the information transmission method according to any one of claims 1 to 8 and claims 9 to 15.

20. A storage medium having instructions stored thereon that, when run on a communication device, cause the communication device to execute the information transmission method according to any one of claims 1 to 8 and claims 9 to 15.
